# EUROPEAN PATENT SPECIFICATION

(11) **EP 0 940 600 B1**
(45) Date of publication and mention of the grant of the patent: **27.11.2002**
(21) Application number: 99301641.9
(22) Date of filing: 04.03.1999
(51) Int. Cl.: F16D 65/16, F16D 55/22

(54) **Disc brake device**
Scheibenbremsvorrichtung
Dispositif de frein à disque

(30) Priority: 04.03.1998 JP 5197198
(43) Date of publication of application: 08.09.1999
(73) Proprietor: NISSHINBO INDUSTRIES INC., Chuo-ku, Tokyo (JP)
(72) Inventor: Asai, Seiji, Okazaki City, Aichi Pref. (JP); Matsuishi, Kazuyuki, c/o Nisshinbo Industries, Inc, Nagoya City, Aichi Pref. (JP)
(74) Representative: Senior, Alan Murray

(56) References cited:
- WO-A-96/12900
- WO-A-97/22814

## Description

The present invention relates to a disc brake device according to the preamble of claim 1, and in particular, a floating caliper type disc brake device which is preferably for a commercial vehicle. Explaining in more detail, the invention relates to an improvement in ease of maintenance operations in a disc brake device.

A disc brake device is usually constituted so as to brake a disc rotor rotated together with a rotating member by clamping the disc rotor by a pair of brake pads arranged on axially opposite sides of the disc rotor.

Further, in a disc brake device for a commercial vehicle, a mechanism for pushing a pair of brake pads against a disc rotor can be constructed as follows, as to disclosed in International Patent Publication No. WO96/36819 of PCT/EP96/02036 and Japanese Patent laid-Open No. H8-508080.

Each of disc brake devices in these Publications is constituted as a service brake for a heavy-duty vehicle such a large sized truck, a tractor or a bus, and comprises;
a caliper body arranged over an outer periphery of a disc rotor rotating together with a wheel, and having a slidably fitting strut for pushing one of a pair of brake pads against the disc rotor, and
a cover part having a fixed anchor opposed the strut, and covering an opening at one end of the caliper body where the strut is provided,
wherein the caliper body and the cover part are detachably connected to each other by means of bolts or the like so as to constitute a caliper of the disc brake device.

In this arrangement of the disc brake device, the reason why the caliper is composed of the caliper body and the cover part which are separated from each other, is for improvement of the machinability of caliper components and the assemblability of caliper component parts into the caliper.

Furthermore, an eccentric cam is interposed between the strut and the fixed anchor, and is fitted on a surface of the fixed anchor opposed to the strut through a semi-cylindrical bearing which is arranged in parallel to a flat surface of the disc rotor,

When the above-mentioned eccentric cam is rotated around the center axis of the semi-cylindrical bearing by pushing the distal end of a cam lever radially extending from the eccentric cam, the corresponding brake pad is pushed against the disc rotor through the strut under cam action of the eccentric cam.

When assembling caliper component parts into the caliper, a caliper side opening of the cover part is hold to be skyward, and in this condition, the semi-cylindrical bearing is set on a cylindrical cave formed on the surface of the fixed anchor opposed to the strut. Then the eccentric cam is set on the semi-cylindrical bearing and the cam lever fixed to the eccentric cam is placed in desired position.

Thereafter, the caliper body in which the strut has been previously inserted at its corresponding end is laid on the cover part in the above condition so as to hold the eccentric cam between the strut and the fixed anchor, and then, the caliper body and the cover part are connected to each other by bolts.

By the way, the caliper in use is usually mounted horizontally on a chassis of a vehicle to be arranged over an upper portion of an outer peripheral surface of the disc rotor, and accordingly, in such a case that the disc brake device is subjected to maintenance while the caliper being in the above horizontally mounted condition, the cover part also has to be detached from or attached to the caliper body in a horizontal condition.

However, in the abovementioned arrangement of the disc brake device, the eccentric cam and the cam lever possibly drop by their own weights from the cover part during handling of the cover part to detach it from or attach to the caliper body in its horizontal condition. Accordingly, it is impossible to employ a maintenance procedure wherein the cover part is detached from or attached to the caliper body while the disc brake device is held in a usefully mounted horizontal condition.
Thus, there has been raised such a disadvantage that the disc brake device has to be detached in its entirety from a chassis of a vehicle for every maintenance.

WO 97/22814, upon which the precharacterising portion of claim 1 is based, concerns a modular disc brake device. It includes a frame which extends over the eccentric cam and cam lever to prevent them from dropping under their own weights.

It is, therefore, a primary object of the present invention to be capable for surely carrying out disassembly and re-assembly for maintenance of a disc brake device even if it is held in a usefully mounted horizontal condition, and to thereby solve the above-mentioned problem.

To attain the above primary object, according to the present invention, there is provided a disc brake device comprising a caliper consisted of a caliper body and a cover part detachably connected to each other,
the caliper body being adapted to cover an outer periphery of a disc rotor rotating together with a wheel, and having a slidably fitting strut for pushing one of a pair of brake pads against the disc rotor,
the cover part having a fixed anchor opposed to the strut, and covering an opening at one end of the caliper body where the strut is provided, wherein,
an eccentric cam is interposed between the strut and the fixed anchor, and is fitted on a surface of the fixed anchor opposed to the strut through a semi-cylindrical bearing parallel to a flat surface of the disc rotor,
such that on rotation of the eccentric cam around a centre axis of the semi-cylindrical bearing by pushing the distal end of a cam lever radially extending from the eccentric cam, the corresponding brake pad is pushed against the disc rotor through the strut under cam action of the eccentric cam,
a pre-assembling means is provided between said cam lever and said cover part so that said eccentric cam and said cam lever can be moved together with the cover part without dropping from the cover part by their own weights even if the cover part is detached from or attached to the caliper body while said caliper is held horizontal; characterised in that,
said pre-assembling means is constituted by a protrusion provided on the cam lever and adapted to engage with said cover part so as to prevent said eccentric cam and said cam lever from dropping.

With the above-mentioned arrangement of the disc brake device according to the present invention, it is possible due to the pre-assembling means between the cam lever and the cover part to move the eccentric cam and the cam lever together with the cover part without dropping thereof from the cover part even if the cover part is detached from or attached to the caliper body while the caliper is held in usefully mounted horizontal condition.

Therefore, even if the cover part is detached from or attached to the caliper body for maintenance of the disc brake device while the caliper is held in usefully mounted condition and thus in horizontal posture, the eccentric cam is prevented from dropping by the pre-assembling means, and the maintenance of the disc brake device can be carried out easily even in its horizontally mounted condition.

Thus, the disc brake device need not be detached in its entirety from a chassis of a vehicle for every maintenance as in the known disc brake device, this makes it possible to enhance the ease of the maintenance operation relative to the disc brake device.

An advantageous embodiment of the present invention provides a disc brake device, wherein
said pre-assembling means is constituted by a protrusion provided on the cam lever and adapted to engage with said cover part so as to prevent said eccentric cam and said cam lever from dropping.

In this arrangement, the above primary object can be attained at lower cost only by addition of the protrusion to the cam lever.

Another advantageous embodiment of the present invention provides a disc brake device, wherein
said semi-cylindrical bearing is constituted by a needle roller bearing.

Such an arrangement of the disc brake device serves to efficiently transmit a brake actuating force to the eccentric cam to be capable of enhancing a mechanical efficiency of the disc brake device.

Still another advantageous embodiment of the present invention provides a disc brake device, wherein
the outer peripheral surface of said eccentric cam guided by said semi-cylindrical bearing is prolonged peripherally at an axial position where said strut does not interfere, and the outer peripheral surface extension part of the eccentric cam formed thereby is determined in length such that the outer peripheral surface of the eccentric cam including the outer peripheral surface extension part extends over an angle greater than 180 degree.

This embodiment makes it possible to facilitate an accurate measurement of a diameter at the outer periphery of the eccentric cam, which measurement is required to be high accuracy for desired accurate cam action of the eccentric cam, and moreover this embodiment preferably is able to attain the above functional effect without remarkably increasing the weight of the eccentric cam.

The disc brake device according to the present invention is preferably such that said cam lever is composed of a pair of cam levers which are integrally incorporated with axially opposite ends of said eccentric cam, and an eccentric cam operating member to which is input a brake operating force is provided between the distal ends of said cam levers.

This arrangement is preferably available for a parking brake in which brake pads of small circumferential width are used, since the above arrangement makes it possible in such parking brake to make uniform this distribution of pushing force on the friction surface of the brake pad and to prevent the brake pads from being unusually worn.

The disc brake device according to the present invention may have an arrangement, wherein
a pair of said eccentric cams are co-axially arranged and connected to each other, said cam lever is provided and connected at the connected portion between the pair of eccentric cams so that a brake operating force is input to the distal end of said cam lever common to said eccentric cams to cause eccentric cam action thereof.

This arrangement is preferably available for a service brake in which brake pads of large circumferential width are used, since the above arrangement makes it possible in such service brake to make uniform the distribution of pushing force on the friction surface of the brake pad and to prevent the brake pads from being unusually worn.

Further objects and advantantages of the invention will be apparent from the following description of the preferred embodiments of the invention as illustrated in the accompanying drawings in which:
Fig. 1 is a partially broken plan view showing a disc brake device according to an embodiment of the present invention in which the essential parts thereof are shown partially broken;
Fig. 2 is a longitudinally sectioned side view of the disc brake device shown in Fig. 1;
Fig. 3 shows a cam body constituting an eccentric cam of the disc brake device shown in Figs. 1 and 2,
   (a) is a front view thereof, and
   (b) is a longitudinally sectioned side view thereof; and
Fig. 4 is a longitudinally sectioned side view of the disc brake device according to the embodiment shown in Figs. 1 and 2, explaining its condition during detaching of the cover part from the caliper body or attaching of the cover part to the caliper body, while the disc brake device is held in usefully mounted horizontal condition.

### DETAILED DESCRIPTION OF THE PREFERRED EMBODIMENT

One preferred embodiment of the invention, by way of examples only, will now be described with reference to the attached drawings.

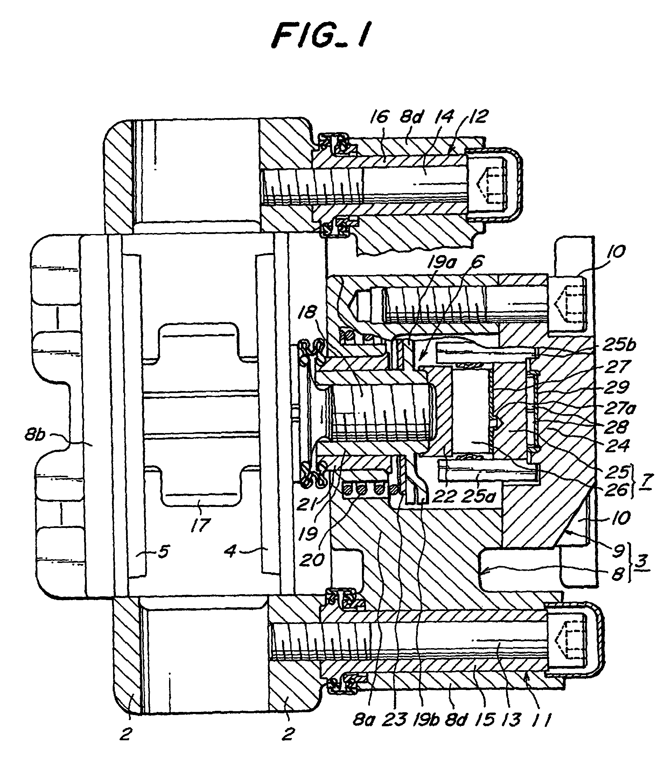

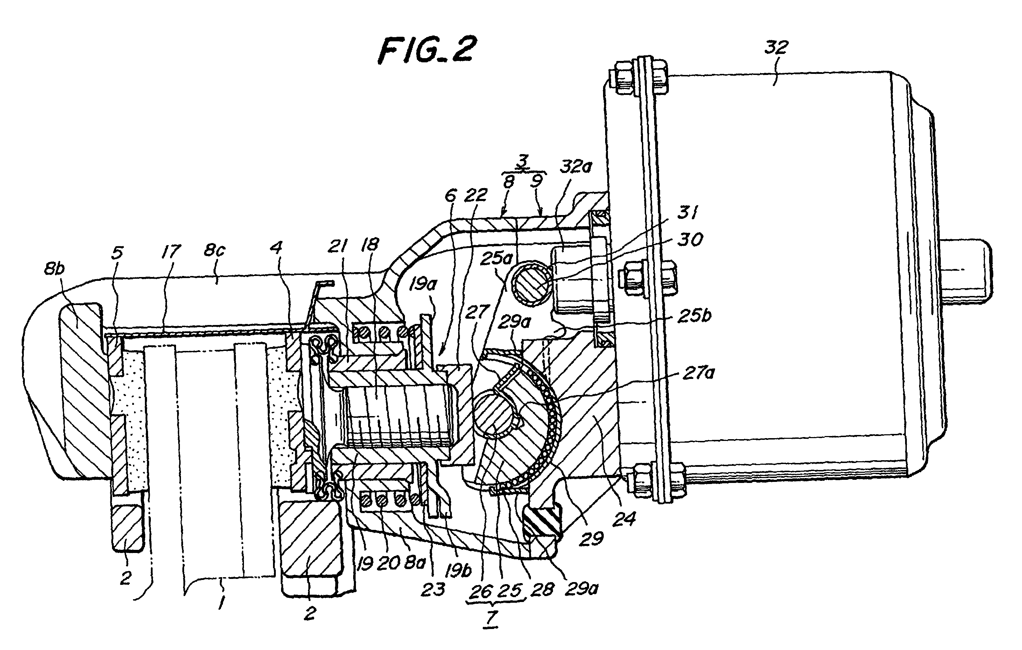

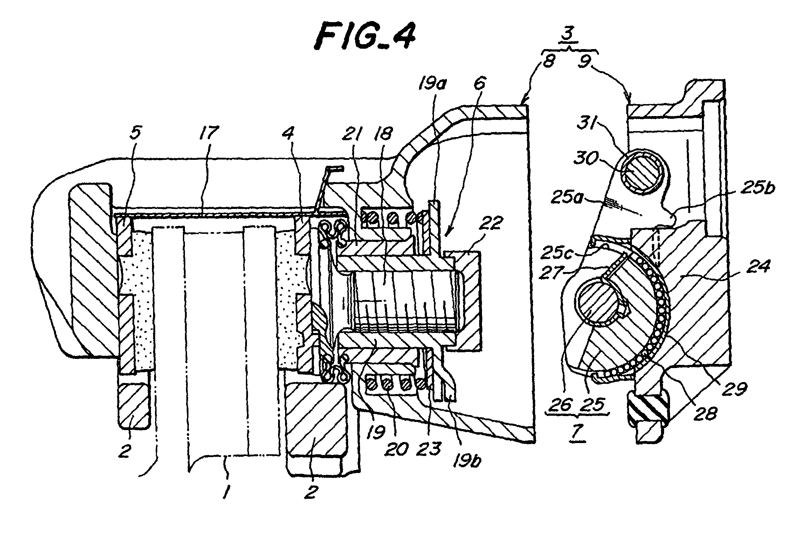

Referring to Figs. 1 to 4 which show a floating caliper type disc brake device according to an embodiment of the present invention, reference numeral 1 in Figs. 2 and 4 denotes a disc rotor.

This disc rotor 1 is attached to a rotating member (for example, an axle of wheel) to be braked by the disc brake device, and is rotated therewith. The disc brake device for braking the rotary motion of this disc rotor 1 is generally composed of a torque receiving member 2, a caliper 3 built-in a strut 6 and an eccentric cam 7, etc., and a pair of brake pads 4, 5.

The torque receiving member 2 is attached to a stationary part (a chassis of a vehicle), not shown in the drawings. The torque receiving member 2 supports the brake pads 4, 5 so as to allow them to displace in the axial direction of the disc rotor 1, but to restrains them from displacing in the circumferential direction thereof.

The pair of brake pads 4, 5 on the torque receiving member 2 is arranged so as to be opposed to each other on opposite sides of the disc rotor 1 in the axial direction thereof.

With this arrangement, when the brake pads 4, 5 are displaced in the axial direction of the disc rotor 1, while being guided by the torque receiving member 2, the disc rotor 1 is axially clamped at its opposite sides by the brake pads 4, 5 to be braked, or the brake pads 4, 5 remote from the disc rotor 1 to release its braking condition.

The arrangement for causing the above-mentioned axial displacement of the brake pads 4, 5 will be now explained below.

The caliper 3 is composed of a caliper body 8 and a cover part 9 detachably connected to each other by means of bolts 10. The caliper body 8, as shown in Fig. 2, is formed to ride over the upper peripheral portion of the disc rotor 1, having one end as a strut insertion part 8a opposing an inner pad 4 of the brake pads 4, 5, and the other end as a reaction force receiving part 8b opposing an outer pad 5 of the brake pads 4, 5, as well as a bridge part 8c connecting between the strut insertion part 8a and the reaction force receiving part 8b. As shown in Fig. 1, the caliper body 8 is also provided with a caliper mounting parts 8d overhanging from the opposite sides of the strut insertion part 8a.

As shown in Fig. 1, the caliper body 8 is supported in floating manner on the torque receiving member 2 by means of a main slide guide mechanism 11 and the sub slide guide mechanism 12 so as to be displaceable in the axial direction of the disc rotor 1.

Now the slide guide mechanisms 11, 12 will be explained.

The torque receiving member 2 is provided with a pair of guide bushings 15, 16 secured thereto respectively by means of bolts 13, 14 planted on the torque receiving member 2.

And then the caliper mounting parts 8d, 8d are slidably fitted on the guide bushings 15, 16 to make the caliper body 8 displaceable in axial direction of the disc rotor 1.

The above arrangement constitutes the slide guide mechanisms 11, 12 which support the caliper body 8 in floating manner on the torque receiving member 2.

The caliper body 8 is also provided thereon with a pad spring 17 for loading the brake pads 4, 5 against the brake pad supporting parts of the torque receiving member 2 so as to prevent the brake pads 4, 5 from rattling.

The strut 6 for pushing the inner pad 4 against a corresponding flat surface of the disc rotor 1, is composed of an adjusting bolt 18 having one end abutting on an end face of the inner pad 4 remote from the disc rotor 1, an adjusting nut 19 threaded on the adjusting bolt 18 and slidably inserted into the strut insertion part 8a of the caliper body 8, and a strut return spring 20 for urging the strut 6 in a direction away from the inner pad 4.

In this arrangement, there is further provided a bushing 21 which is interposed between the adjusting nut 19 and the strut insertion part 8a, and which is fixed in a corresponding hole of the strut insertion part 8a to be slidable with respect to the adjusting nut 19, therefore the durability of the latter is improved.

It is noted that the adjusting nut 19 is provided at its one end face remote from the inner pad 4 with a cap 22 attached thereon to cover an opening at the one end face of the adjusting nut 19. The adjusting nut 19 is further provided at its one side near to the cap 22 with a flange 19a integrally formed thereon and adapted to seat the above-mentioned strut return spring 20 through a low-friction washer 23.

And then the flange 19a is formed with pad clearance adjusting teeth 19b by partially shearing the outer peripheral edge thereof in axial direction of the adjusting nut 19.

The cover part 9 for covering an opening at the end of the caliper body 8 in which the strut 6 is inserted as mentioned above, has a fixed anchor 24 arranged in opposition to the cap 22 of the strut 6 and formed in the cover part 9 integrally incorporated therewith or separately therefrom (it is shown being integrally incorporated).

The eccentric cam 7 is interposed between the fixed anchor 24 and the cap 22 as will be explained hereinbelow.

In this embodiment, the eccentric cam 7 is generally composed of a cam body 25 and a strut pusher 26, the former cam body 25 being of sector cross-sectional shape, and the latter strut pusher 26 being of a columnar body located in a cylindrical inner peripheral surface of the cam body 25 eccentrically from an cylindrical outer peripheral surface of the cam body 25.

For the above arrangement, a cover plate 27 is interposed between the strut pusher 26 and the inner peripheral surface of the cam body 25. And the cover plate 27 is formed with a protrusion 27a formed in at its intermediate portion thereof, which protrusion 27a is inserted in the inner peripheral surface of the cam body 25 to position the cover plate 27 in place, while the strut pusher 26 is gripped by a cylindrical wall of the cover plate 27.

Such eccentric cam 7 is interposed between the fixed anchor 24 and the strut 6 in such manner that a cylindrical outer peripheral surface of the cam body 25 bears against the surface of the fixed anchor 24 opposed to the strut 6 through a needle roller bearing 28 as a semi-cylindrical bearing parallel to the flat surface of the disc rotor 1, and that the strut pusher 26 abuts against the cap 22.

It is noted here that the needle roller bearing 28 is seated on the fixed anchor 24 through a bearing sheet 29 which protects the fixed anchor 24, which bearing sheet 29 has a pair of pawls 29a engaged with the fixed anchor 24 to check the rotation of the bearing sheet 29.

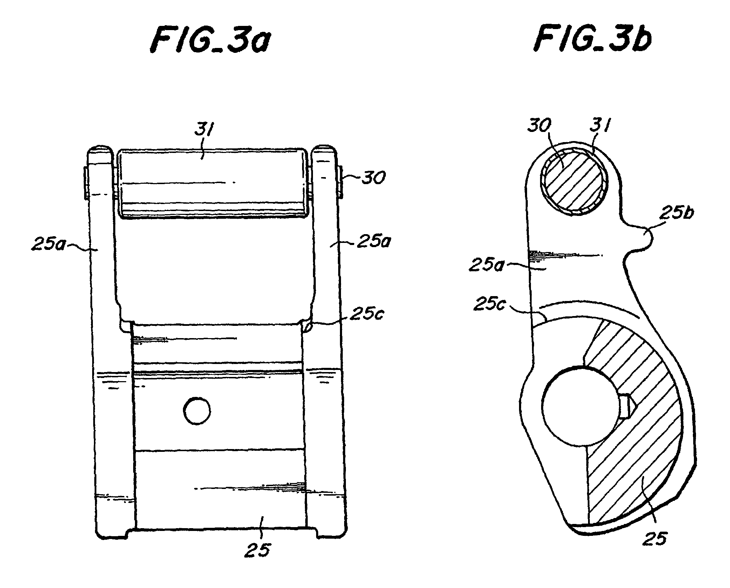

As shown in Fig. 3, the cam body 25 is provided at its axially opposite ends with a pair of cam levers 25a extending radially therefrom, between the distal ends of which cam levers 25a there is bridged a pin 30 on which a sleeve 31 rotatably fitted.

These pin 30 and sleeve 31 constitute an eccentric cam actuating member for input of a brake actuating force, and accordingly, as shown Fig. 2, they are arranged in such manner that the sleeve 31 abuts against a distal end face of a brake actuating rod 32a projected from an air chamber device 32 for effecting brake, which air chamber device 32 is attached on an end face of the cover part 9 remote from the caliper body 8.

The cam body 25 is also provided with protrusions 25b integrally formed at its cam levers 25a as shown in Fig. 3, acting as a pre-assembling means which engage with the cover part 9 (in more detail, the fixed anchor 24) as shown in Figs. 4 and 2 to prevent the cam body 25 (eccentric cam 7) from dropping from the cover part 9 by its own weight even if the cover part 9, as shown in Fig. 4, is detached from or attached to the caliper body 8 while the caliper 3 is held in usefully mounted horizontal condition.

It is noted, in order to achieve a purpose explained later, that the cam body 25 is formed with an outer peripheral surface extension part 25c extending peripherally from the cylindrical outer peripheral surface of the cam body 25 at axially opposite ends where the strut does not interfere as shown in Fig. 3, a length of which outer peripheral surface extension part 25c is determined so that the outer peripheral surface of the cam body 25 including the outer peripheral surface extension part 25c extends over an angle greater than 180 degree.

Next explanation will be made of the operation of the disc brake device in the above-mentioned embodiment.

When braking operation is effected, compressed air is discharged from the air chamber device 32 shown in Fig. 2, and thus, the brake actuating rod 32a is extruded by a spring (not shown) which is incorporated therein.

At this time, the distal end face of the brake actuating rod 32a pushes the sleeve 31 leftward as viewed in Fig. 2 to rotate the cam body 25 around the axis of the cylindrical outer peripheral surface thereof (the axis of the needle roller bearing 28) in corresponding direction through the cam levers 25a.

The rotation of the cam body 25 as mentioned above, causes a swivel motion of the strut pusher 26 arranged eccentrically relative to the cylindrical outer peripheral surface of the cam body 25, to displace the strut 6 leftward as viewed in Figs. 1 and 2 under guidance by the bushing 21 against the spring force of the strut return spring 20.

Thus, the strut 6 urges the inner pad 4 against the associated flat surface portion of the disc rotor 1, and then, the eccentric cam 7 displaces the caliper 3 in a reverse direction by the reaction force thereto to urge the outer pad 5 against the associated flat surface portion of the disc rotor 1.

Therefore, the disc rotor 1 is clamped by the brake pads 4, 5 to be braked the rotation, that is, predetermined braking action can be obtained.

In the embodiment, for adjustment of pad clearance between disc rotor 1 and brake pads 4, 5, a suitable tool is inserted into the disc brake device to engage with one of the pad clearance adjusting teeth 19b and to rotate the adjusting nut 19.

Such rotation of the adjusting nut 19 causes a corresponding axial displacement of the adjusting bolt 18 relative to the adjusting nut 19 by screw function between these adjusting bolt 18 and adjusting nut 19, whereby the pad clearance between disc rotor 1 and brake pads 4, 5 is able to be adjusted in desired manner.

In the horizontally mounted condition of the disc brake device as shown in Fig. 1 and 2, when the cover part 9 is detached from or attached to the caliper body 8 for maintenance of the disc brake device, firstly the bolts 10 shown in Fig. 1 are removed from the disc brake device and then the operation for the above is carried out as shown in Fig. 4.

In this operation as shown in Fig. 4, the eccentric cam 7 is prevented from dropping out of the cover part 9 since the protrusions 25b of the eccentric cam 7 engage with the fixed anchor 24, and accordingly, the cover part 9 can be detached from or attached to the caliper body 8 for maintenance of the disc brake device even if the disc brake device is held in usefully mounted horizontal condition.

Thus, when the maintenance of the disc brake device, it is possible to eliminate the necessity of detaching the disc brake device entirely from horizontally mounted condition relative to the chassis of vehicle, which detachment is necessary in the conventional disc brake device. This makes it possible to greatly improve an easiness and speediness of maintenance operation of the disc brake device.

It is noted that the present embodiment attains the above-mentioned functional effects only due to additional of the protrusions 25b integrally formed on the cam lever 25a, and accordingly, it is possible to achieve the desired object at a lower cost.

Further, in this embodiment, the cam body 25 is formed with the outer peripheral surface extension part 25c at axially opposite ends where the strut 6 does not interfere, which outer peripheral surface extension part 25c is determined in length so that the outer peripheral surface of the cam body 25 including the outer peripheral surface extension part 25c extends over an angle greater than 180 degree.

This outer peripheral surface of the cam body 25 including the extension part 25c makes it possible to facilitate an accurate measurement of a diameter at the outer peripheral surface of the cam body 25, which measurement is required to be high accuracy for desired accurate cam action of the eccentric cam 7, and makes it possible to attain the above functional effect without remarkably increasing the weight of the eccentric cam 7, whereby it is possible to availably enhance the efficiency of manufacturing the cam body 25.

Further, in this embodiment, the cam body 25 is provided at its axially opposite ends with the pair of cam levers 25a extending radially therefrom, between the distal ends of which cam levers 25a there is bridged the pin 30 on which the sleeve 31 as an eccentric cam actuating member is rotatably fitted. This arrangement makes it possible to uniform a distribution of pushing force on friction surface of the brake pad 4, 5, and to prevent these brake pads from being unusually worn so that the durability thereof is improved.

It has been explained in this embodiment that the disc brake device is constituted suitable for a parking brake in which brake pads 4, 5 of relatively small circumferential width are used. But, in case of a service brake in which brake pads 4, 5 of relatively large circumferential width are used, although it is not shown, two eccentric cams 7 may be arranged co-axially and connected to each other, and there may be provided and connected at the connected portion between these eccentric cams 7 a common cam lever 25a extending radially from the connected portion, wherein an brake actuating force for the service brake is inputted to the common cam lever 25a.

This arrangement, even if the disc brake device is suitable for a service brake in which the brake pads 4, 5 of relatively large circumferential width are used, makes it possible to uniform a distribution of pushing force on friction surface of the brake pad 4, 5, and to prevent these brake pads from being unusually worn so that the durability thereof is improved.

Also in this arrangement having two co-axially arranged eccentric cams 7 and the common single cam lever 25a connected at the connected portion between these eccentric cams 7, a protrusion similar to the protrusion 25b as mentioned above may be provided on the common cam lever 25a, which protrusion engages with an associated position of the cover part 9 to prevent the eccentric cams 7 from dropping while the cover part 9 is detached from or attached to the caliper body 8, whereby it is possible to enhance an easiness of the maintenance operation of the disc brake device.

## Claims

1. A disc brake device comprising a caliper (3) consisted of a caliper body (8) and a cover part (9) detachably connected to each other,
the caliper body (8) being adapted to cover an outer periphery of a disc rotor (1) rotating together with a wheel, and having a slidably fitting strut (6) for pushing one of a pair of brake pads (4,5) against the disc rotor (1),
the cover part (9) having a fixed anchor (24) opposed to the strut (6), and covering an opening at one end of the caliper body (8) where the strut (6) is provided, wherein,
an eccentric cam (7) is interposed between the strut (6) and the fixed anchor (24), and is fitted on a surface of the fixed anchor (24) opposed to the strut (6) through a semi-cylindrical bearing parallel to a flat surface of the disc rotor (1),
such that on rotation of the eccentric cam (7) around a centre axis of the semi-cylindrical bearing by pushing the distal end of a cam lever (25a) radially extending from the eccentric cam (7), the corresponding brake pad (4,5) is pushed against the disc rotor through the strut under cam action of the eccentric cam (7),
a pre-assembling means is provided between said cam lever (25a) and said cover part (9) so that said eccentric cam (7) and said cam lever (25a) can be moved together with the cover part (9) without dropping from the cover part (9) by their own weights even if the cover part (9) is detached from or attached to the caliper body (8) while said caliper (3) is held horizontal; **characterised in that**,
said pre-assembling means is constituted by a protrusion (25b) provided on the cam lever (25a) and adapted to engage with said cover part (9) so as to prevent said eccentric cam (7) and said cam lever (25a) from dropping.

2. A disc brake device as set forth in claim 1, **characterised in that** said semi-cylindrical bearing is constituted by a needle roller bearing (28).

3. A disc brake device as set forth in claim 1 or 2, **characterised in that** the outer peripheral surface of said eccentric cam (7) guided by said semi-cylindrical bearing is prolonged peripherally at an axial position where said strut (6) does not interfere, and the outer peripheral surface extension part of the eccentric cam (7) formed thereby is determined in length such that the outer peripheral surface of the eccentric cam (7) including the outer peripheral surface extension part extends over an angle greater than 180 degree.

4. A disc brake device as set forth in claims 1 to 3, **characterised in that** said cam lever (25a) is composed of a pair of cam levers which are integrally incorporated with axially opposite ends of said eccentric cam (7), and an eccentric cam operating member to which is input a brake operating force is provided between the distal ends of said cam levers.

5. A disc brake device as set forth in any one of claims 1 to 3, **characterised in that** a pair of said eccentric cams are co-axially arranged and connected to each other, said cam lever (25a) is provided and connected at the connected portion between the pair of eccentric cams so that a brake operating force is input to the distal end of said cam lever common to said eccentric cams to cause eccentric cam action thereof.

## Patentansprüche

1. Scheibenbremsenvorrichtung mit einem Bremssattel (3) bestehend aus einem Bremssattelaufbau (8) und einem Abdeckteil (9), die lösbar mit einander verbunden sind,
wobei der Bremssattelaufbau (8) so ausgelegt ist, dass er einen Außenumfang der zusammen mit einem Rad drehenden Bremsscheibe (1) abdeckt, und eine gleitend passende Strebe (6) zum Schieben eines des Paars Bremsbeläge (4,5) gegen die Bremsscheibe (1) aufweist,
wobei der Abdeckteil (9) eine feste Verankerung (24) gegenüber der Strebe (6) aufweist und eine Öffnung an einem Ende des Bremssattelaufbaus (8), wo die Strebe (8) vorgesehen ist, abdeckt, wobei
ein Exzenter (7) zwischen der Strebe (6) und der festen Verankerung (24) dazwischen gesetzt ist und an einer Fläche der festen Verankerung (24) gegenüber der Strebe (6) durch ein halbzylindrisches Lager parallel zu einer flachen Fläche der Bremsscheibe (1) angebracht ist,
so dass bei Drehung des Exzenters (7) um eine Mittelachse des halbzylindrischen Lagers durch Schieben des distalen Endes eines sich radial von dem Exzenter (8) erstreckenden Exzenterhebels (25a) die entsprechende Bremsscheibe (4, 5) durch die Strebe unter Nockenwirkung des Exzenters (7) gegen die Bremsscheibe geschoben wird,
ein Vormontagemittel zwischen dem Exzenterhebel (25a) und dem Abdeckteil (9) vorgesehen ist, so dass der Exzenter (7) und der Exzenterhebel (25a) zusammen mit dem Abdeckteil (9) bewegt werden können, ohne dass sie durch ihr Eigengewicht von dem Abdeckteil (9) fallen, selbst wenn das Abdeckteil (9) von dem Bremssattelaufbau (8) gelöst bzw. daran befestigt ist, während der Bremssattel (3) horizontal gehalten wird;
**dadurch gekennzeichnet, dass**
das Vormontagemittel durch eine an dem Exzenterhebel (25a) vorgesehene Vorwölbung (25b) gebildet wird und so ausgelegt ist, dass es mit dem Abdeckteil (9) so greift, dass ein Fallen des Exzenters (7) und des Exzenterhebels (25a) verhindert wird.

2. Scheibenbremsenvorrichtung nach Anspruch 1, **dadurch gekennzeichnet, dass** das halbzylindrische Lager durch ein Nadelwälzlager (28) gebildet wird.

3. Scheibenbremsenvorrichtung nach Anspruch 1 oder 2 , **dadurch gekennzeichnet, dass** die Außenumfangsfläche des durch das halbzylindrische Lager gelenkten Exzenters (7) an einer axialen Position, an der die Strebe (6) nicht stört, peripher verlängert ist und der dadurch gebildete Außenumfangsflächen-Verlängerungsteil des Exzenters (7) längenmäßig so festgelegt wird, dass die Außenumfangsfläche des Exzenters (7) einschließlich des Außenumfangsflächen-Verlängerungsteils sich über einen Winkel von über 180 Grad erstreckt.

4. Scheibenbremsenvorrichtung nach den Ansprüchen 1 bis 3, **dadurch gekennzeichnet, dass** der Exzenterhebel (25a) aus einem Paar Exzenterhebel, die mit axial gegenüberliegenden Enden des Exzenters (7) einstückig ausgebildet sind, besteht und ein Exzenterbedienungselement, dem eine Bremsbetätigungskraft zugeführt wird, zwischen den distalen Enden der Exzenterhebel vorgesehen ist.

5. Scheibenbremsenvorrichtung nach einem der Ansprüche 1 bis 3, **dadurch gekennzeichnet, dass** ein Paar Exzenter koaxial angeordnet sind und mit einander verbunden sind, wobei der Exzenterhebel (25a) an dem verbundenen Teil zwischen dem Paar Exzenter vorgesehen und verbunden ist, so dass dem distalen Ende des zu den Exzentern gehörigen Exzenterhebels eine Bremsbetätigungskraft zugeführt wird, um eine Exzenterwirkung derselben auszulösen.

## Revendications

1. Dispositif de frein à disque comprenant un étrier (3) constitué d'un corps (8) d'étrier et d'une pièce formant couvercle (9) connectés l'un à l'autre de manière détachable,
le corps (8) d'étrier étant conçu pour recouvrir une périphérie extérieure d'un disque rotatif (1) tournant avec une roue, et comportant une barre montée à coulissement (6) pour pousser une plaquette d'une paire de plaquettes de frein (4, 5) contre le disque rotatif (1),
la pièce formant couvercle (9) ayant une bride d'ancrage (24) en vis-à-vis de la barre (6), et recouvrant une ouverture réalisée à une extrémité du corps (8) d'étrier où est placée la barre (6), dans lequel
une came excentrique (7) est intercalée entre la barre (6) et la bride d'ancrage (24), et est montée sur une surface de la bride d'ancrage (24) en vis-à-vis de la barre (6) via un roulement semi-cylindrique parallèle à une surface plate du disque rotatif (1),
de sorte que lors de la rotation de la came excentrique (7) autour de l'axe du roulement semi-cylindrique en poussant l'extrémité distale d'un levier de came (25a) s'étendant radialement depuis la came excentrique (7), la plaquette de frein (4, 5) correspondante est poussée contre le disque rotatif via la barre sous l'action de came de la came excentrique (7),
un moyen de pré-assemblage est placé entre ledit levier de came (25a) et ladite pièce formant couvercle (9) de telle manière que ladite came excentrique (7) et ledit levier de came (25a) peuvent être déplacés en même temps que la pièce formant couvercle (9) sans tomber de la pièce formant couvercle (9) de leur propre poids même si la pièce formant couvercle (9) est détachée ou attachée au corps (8) d'étrier tandis que ledit étrier (3) est maintenu à l'horizontale ;
**caractérisé en ce que**
ledit moyen de pré-assemblage est constitué d'une protubérance (25b) prévue sur le levier de came (25a) et conçue pour coopérer avec ladite pièce formant couvercle (9) de façon à empêcher ladite came excentrique (7) et ledit levier de came (25a) de tomber.

2. Dispositif de frein à disque selon la revendication 1, **caractérisé en ce que** ledit roulement semi-cylindrique est constitué d'un roulement à aiguilles (28).

3. Dispositif de frein à disque selon la revendication 1 ou 2, **caractérisé en ce que** la surface périphérique extérieure de ladite came excentrique (7) guidée par ledit roulement semi-cylindrique est prolongée au niveau de sa périphérie en une position axiale où ladite barre (6) n'interfère pas, et la partie d'extension de la surface périphérique extérieure de la came excentrique (7) ainsi formée est dimensionnée en longueur de telle manière que la surface périphérique extérieure de la came excentrique (7) incluant la partie d'extension de surface périphérique extérieure s'étend sur un angle supérieur à 180 degrés.

4. Dispositif de frein à disque selon les revendications 1 à 3, **caractérisé en ce que** ledit levier de came (25a) se compose d'une paire de leviers de came qui sont incorporés d'un seul tenant avec les extrémités axialement opposées de ladite came excentrique (7), et un élément d'actionnement de came excentrique qui reçoit en entrée une force d'actionnement de frein est placé entre les extrémités distales desdits leviers de came.

5. Dispositif de frein à disque selon l'une quelconque des revendications 1 à 3, **caractérisé en ce que** deux cames excentriques dudit type sont agencées coaxialement et connectées l'une à l'autre, ledit levier de came (25a) est placé et connecté au niveau de la partie connectée entre les deux cames excentriques de sorte qu'une force d'actionnement de frein est appliquée en entrée de l'extrémité distale dudit levier de came commun auxdites cames excentriques pour provoquer l'action de came excentrique de celles-ci.
